# EUROPÄISCHE PATENTSCHRIFT

(11) **EP 1 523 746 B1**
(45) Veröffentlichungstag und Bekanntmachung des Hinweises auf die Patenterteilung: **01.12.2010**
(21) Anmeldenummer: 03740310.2
(22) Anmeldetag: 20.06.2003
(51) Int. Cl.: G11B 33/04, E05B 73/00, B65D 85/57

(54) **AUFBEWAHRUNGSKASSETTE FÜR MINDESTENS EINEN BILD-, TON- ODER DATENTRÄGER, Z. B EINE CD ODER EINE DVD**
STORAGE CASE FOR AT LEAST ONE IMAGE, SOUND OR DATA CARRIER, E.G. A CD OR A DVD
CASSETTE DE STOCKAGE POUR AU MOINS UN SUPPORT D'IMAGES, DE SONS OU DE DONNEES, PAR EX. UN CD OU UN DVD

(30) Priorität: 20.06.2002 DE 20209566 U
(43) Veröffentlichungstag der Anmeldung: 20.04.2005
(73) Patentinhaber: CARTONNERIES DE THULIN S.A., B-7350 Thulin (BE)
(72) Erfinder: LAMMERANT, Filip, B-7350 Thulin (BE)
(74) Vertreter: Christophersen, Ruth
(86) Internationale Anmeldenummer: PCT/EP2003/006584
(87) Internationale Veröffentlichungsnummer: WO 2004/001759

(56) Entgegenhaltungen:
- EP-A- 1 083 569
- WO-A-02/42587
- GB-A- 2 351 277
- US-A- 5 598 728
- PATENT ABSTRACTS OF JAPAN vol. 2000, no. 08, 6. Oktober 2000 (2000-10-06) -& JP 2000 142863 A (NISSHIN:KK), 23. Mai 2000 (2000-05-23)

## Beschreibung

Die Erfindung betrifft eine Aufbewahrungskassette für mindestens einen Bild-, Ton- oder Datenträger, z. B. eine CD oder eine DVD, mit zwei im wesentlichen rechteckig gestalteten, entlang eines ersten Längsrandes über ein Gelenk miteinander verbundenen und einen den Bild-, Ton- oder Datenträger sowie eine Druckschrift aufnehmenden Innenraum umschließenden Grundelementen, wobei das erste Grundelement ein den mindestens einen Datenträger haltendes und hierzu entsprechende Haltemittel aufweisendes Basisteil ist, das entlang seiner Ränder mit Schmalseitenwändern versehen ist, und das zweite Grundelement ein Deckel ist, welcher bei geschlossener Aufbewahrungskassette dessen Innenraum verschließt und eine Druckschrift aufnimmt, und mit einem zwischen den einander zugewandten Innenseiten von Basisteil und Deckel angeordneten und aus der Aufbewahrungskassette herausziehbaren Verriegelungsteil, welches Basisteil und Deckel im Bereich des dem ersten Längsrand abgewandten zweiten Längsrandes gegeneinander verriegelt, wobei fest mit dem Basisteil verbundene und in den Innenraum hinein ragende erste Verriegelungsstrukturen das Verriegelungsteil an seiner dem Deckel zugewandten Seite, und fest mit dem Deckel verbundene und in den Innenraum hinein ragende zweite Verriegelungsstrukturen das Verriegelungsteil auf seiner dem Basisteil zugewandten Seite umgreifen.

Gesicherte Aufbewahrungskassetten sind z. B. aus den Druckschriften US 5,598,728 und US 5,988,376 bekannt. Das Verriegeln der Aufbewahrungskassette, um diese insbesondere gegen einen Diebstahl des darin angeordneten Bild-, Ton- oder Datenträgers zu sichern, erfolgt über ein von außen an die Aufbewahrungskassette ansetzbares Schloss. Das Schloss greift mit hakenförmigen Vorsprüngen in entsprechende Ausnehmungen an zwei einander abgewandten Schmalseiten der Aufbewahrungskassette ein. Ferner sind an dem Schloss zwei langgestreckte Flansche angeformt, die den Längsrand der Aufbewahrungskassette vollständig abdecken, wodurch sich die beiden Gehäusehälften der Aufbewahrungskassette nicht mehr öffnen lassen, zumindest nicht ohne Gewaltanwendung. Die Effizienz gegen einen unbefugten Zugriff in das Innere der Aufbewahrungskassette wird noch dadurch erhöht, dass das Schloss an jenem Längsrand der Aufbewahrungskassette befestigt wird, an dem sich diese normalerweise öffnen lässt, wohingegen der diesem Längsrand abgewandte andere Längsrand als Scharnier ausgebildet ist, welches sich ohnehin nicht ohne Gewaltanwendung öffnen lässt.

Die mit der US 5,598,728 sowie der US 5,988,376 vorgeschlagenen, gesicherten Aufbewahrungskassetten sind in der Herstellung aufwendig und damit teuer, außerdem führen sie zu einer deutlichen Vergrößerung der Maße der Aufbewahrungskassette. Heutige Aufbewahrungskassetten hingegen müssen preiswert in großen Stückzahlen herstellbar sein und sich ferner dem weltweit weitgehend einheitlichen Maßsystem anpassen, weshalb es im Einzel- und Großhandel mit derartigen Erzeugnissen unerwünscht ist, alleine zu Zwecken einer verbesserten Sicherung des Inhalts der Aufbewahrungskassetten von den eingeführten Maßsystemen abzuweichen.

Ferner sei auf die WO 02/42587 A2 hingewiesen, die zur Formulierung des Oberbegriffs des Anspruchs 1 herangezogen wurde.

Aus der WO 02/42587 A2 ist eine Aufbewahrungskassette für z. B. Compact-Discs oder DVDs bekannt, welche in ihren Abmessungen den auf dem Markt herkömmlichen Kassetten entspricht. Diese Aufbewahrungskassette ist mit einer Sicherungseinrichtung mit einem sich entlang des Öffnungsrandes der Kassette erstreckenden und aus der Schmalseite der Kassette herausziehbaren Sicherungsstab versehen. Der Sicherungsstab wird von Laschen hintergriffen, die sich in U-förmiger Gestaltung an den Innenseiten sowohl des Basisteils, als auch des Deckels der Kassette befinden. Auf diese Weise sind die beiden Hälften der Kassette über die angeformten Laschen gegeneinander verriegelt, solange sich der Sicherungsstab in der Kassette befindet.

Die so gestaltete Sicherungseinrichtung beansprucht einen relativ großen Raumbedarf im Innenraum der Aufbewahrungskassette. Von Nachteil ist dies in Bezug auf den Platz für ein im Innenraum der Kassette unterzubringendes Beiblatt oder Begleitheft. Für dieses steht wegen der integrierten Sicherungseinrichtung nicht die volle Innenabmessung im Deckel der Aufbewahrungskassette zur Verfügung.

Der Erfindung liegt die **Aufgabe** zugrunde, eine in großen Stückzahlen preiswerte herstellbare, gegen unbefugten Zugriff auf ihren Inhalt gesicherte Aufbewahrungskassette für Bild-, Ton- oder Datenträger wie z. B. Compactdiscs oder DVD zu schaffen, deren Abmessungen die herkömmlichen Abmessungen einer solchen Aufbewahrungskassette nicht übersteigen, und die Platz für die Unterbringung einer nur geringfügig kleiner als die Innenabmessungen der Aufbewahrungskassette gestalteten Druckschrift, z. B. eines Beiblattes oder eines Begleitheftes, bietet.

Zur **Lösung** dieser Aufgabe wird bei einer Aufbewahrungskassette mit den eingangs genannten Merkmalen vorgeschlagen, dass die ersten Verriegelungsstrukturen zur Unterbringung einer möglichst großformatigen Druckschrift im Deckel nicht über die Höhe der Schmalseitenwände des Basisteils hinausragen.

Vorteilhaft ist eine solche Aufbewahrungskassette vor dem Hintergrund, dass darin nicht nur der eigentliche Bild-, Ton- oder Datenträger unterzubringen ist, sondern zusätzlich eine Druckschrift, wie z. B. ein Beiblatt oder ein Begleitheft. Angestrebt ist, dass diese Druckschrift möglichst großformatig gestaltet werden kann, d. h. möglichst nur geringfügig kleiner, als die Innenabmessungen der Aufbewahrungskassette selbst. Durch zusätzliche, in der Aufbewahrungskassette angeordnete Sicherungssysteme wird dieser, für ein möglichst großes Begleitheft wünschenswerte Raum prinzipiell beeinträchtigt. Damit gleichwohl die vollständigen Innenmaße zur Unterbringung eines entsprechend großen Begleitheftes erhalten bleiben, ist das Basisteil entlang aller vier Ränder mit Schmalseitenwänden versehen, über deren Höhe die ersten Verriegelungsstrukturen, also die an dem Basisteil angebrachten Verriegelungsstrukturen, nicht hinausragen. Auf diese Weise bleibt im Inneren des Deckels noch genügend Raum, um dort ein Beiblatt oder ein Begleitheft in normaler Größe unterzubringen.

Die Aufbewahrungskassette selbst weist dieselben Außenmaße auf, wie die Aufbewahrungskassetten ohne eine Zugriffssicherung. Die vor allem im Groß- und Einzelhandel vorhandenen Fertigungs-, Transport- und Lagersysteme müssen daher nicht auf ein anderes Maß der Aufbewahrungskassette umgestellt werden, weshalb die erfindungsgemäße Aufbewahrungskassette insgesamt sehr marktfreundlich gestaltet ist.

Die Aufbewahrungskassette ist in großen Stückzahlen preiswert herstellbar, da sie sich aus nur wenigen, einfach zu produzierenden Teilen zusammensetzt. So lassen sich die erfindungsgemäßen Verriegelungsstrukturen unmittelbar an den Grundelementen anspritzen, zumal es sich bei den Grundelementen einer Aufbewahrungskassette für eine CD oder DVD ohnehin um Kunststoff-Spritzteile z. B. Polypropylen handelt. Das einzige separate Teil, welches im Vergleich zu einer ungesicherten Aufbewahrungskassette hinzutritt, ist das aus der Aufbewahrungskassette- herausziehbare Verriegelungsteil. Dieses lässt sich jedoch aufgrund seiner Anordnung, Struktur und Materialzusammenstellung ebenfalls mit einfachen Mitteln und daher sehr preisgünstig produzieren. Insgesamt sind daher die Herstellungskosten einer erfindungsgemäßen, gesicherten Aufbewahrungskassette nur geringfügig höher, als die Herstellungskosten einer entsprechenden, jedoch ungesicherten Aufbewahrungskassette.

Von Vorteil ist ferner, dass sich die Sicherung bereits im Rahmen der Produktion und insbesondere Bestückung der Aufbewahrungskassette einbauen lässt. Ein nachträgliches Versehen der Kassette mit Sicherungssystemen, z.B. beim Einzelhandel, ist nicht mehr erforderlich. Die Aufbewahrungskassetten werden so in die Verkaufsräume gestellt, wie sie vom CD-Hersteller oder DVD-Hersteller angeliefert werden.

Vorteilhafte Ausgestaltungen der erfindungsgemäßen Aufbewahrungskassette sind in den Unteransprüchen angegeben.

Die Herstellung der Aufbewahrungskassette im Spritzgussverfahren lässt sich dadurch weiter verbessern, dass sich Basisteil und Deckel jeweils aus einer parallel zu dem Bild-, Ton- oder Datenträger angeordneten Grundfläche sowie hierzu senkrecht angeordneten und die Kassette an ihren Schmalseiten verschließenden Stirnwänden zusammensetzen, und dass die Verriegelungstrukturen einstückig an den Grundflächen angeformt sind und von dort in den Innenraum der Aufbewahrungskassette vorstehen.

Ferner wird vorgeschlagen, dass die erste Verriegelungsstruktur bogenförmig in den Innenraum vorsteht, und dass die zweite Verriegelungsstruktur in Gestalt einer hakenförmig gebogenen Lasche in den Innenraum vorsteht.

Es stellt einen besonderen Vorteil dar, wenn das Verriegelungsteil ein Stab ist, welcher sich parallel zu dem zweiten Längsrand erstreckt. Dies führt zu einer besonders raumsparenden Bauweise des in die Aufbewahrungskassette integrierten Sicherungssystems. Außerdem lässt sich durch die Verwendung eines Stabs als Verriegelungsteil jene wirksame Länge des Kassettenhandels, über welcher eine mechanische Verriegelung erfolgt, vergrößern. Von Vorteil ist insbesondere, wenn sich der Stab über nahezu die gesamte Länge des zweiten Längsrandes erstreckt, und sich die Verriegelungsstrukturen sowohl im Bereich des einen Endes wie auch im Bereich des anderen Endes des zweiten Längsrandes befinden. Zusätzliche Verriegelungsstrukturen können auch in der Mitte dieses Längsrandes angeordnet sein, so dass es unmöglich wird, die Grundelemente der Aufbewahrungskassette in diesem Mittenbereich gewaltsam aufzubiegen.

Mit einer weiteren bevorzugten Ausgestaltung wird vorgeschlagen, dass das Verriegelungsteil in Ausziehrichtung formschlüssig gegen zumindest eines der Grundelemente gesperrt ist. Vorzugsweise ist das Verriegelungsteil in Ausziehrichtung durch ein quer zu der Ausziehrichtung federndes Sperrteil gesperrt. Zur Lösung der Sperre können magnetische Kräfte eingesetzt werden, indem z. B. das Sperrteil aus magnetisierbarem Metall besteht und an dem Verriegelungsteil befestigt ist. Bei dieser Ausgestaltung lässt sich die Aufbewahrungskassette erst dann öffnen, wenn zunächst durch Einsatz eines Magneten das Verriegelungsteil in Ausziehrichtung entsperrt wird, bevor sich dieses sodann aus der Aufbewahrungskassette herausziehen lässt. Da das aus magnetisierbarem Metall bestehende Sperrteil an dem Verriegelungsteil befestigt ist, befindet es sich nach der Entsicherung nicht mehr in der Aufbewahrungskassette. Damit ist es dem Kunden, dem lediglich die entsicherte Aufbewahrungskassette übergeben wird, nicht ohne weiteres möglich, noch nachträglich den genauen Ort des Sperrteils zu lokalisieren, und die so erlangten Kenntnisse für spätere Manipulationen einzusetzen.

Mit einer weiteren Ausgestaltung der Aufbewahrungskassette wird eine Öffnung in dem Gehäuse der Aufbewahrungskassette vorgeschlagen, durch die das Verriegelungsteil herausziehbar ist, wobei das Verriegelungsteil mit einer Platte versehen ist, welche in Verriegelungsstellung die Öffnung verschließt. Vorzugsweise ist das Sperrteil unmittelbar hinter der Platte an dem Verriegelungsteil angeordnet. Auf diese Weise muss das Sperrteil, dessen Querschnitt in der Praxis etwas größer sein dürfte, als der übrige Querschnitt des stabförmigen Verriegelungsteils, beim Herausziehen des Verriegelungsteils lediglich durch die leicht vergrößerte Öffnung hindurchtreten, nicht jedoch durch den eher knapp bemessenen Durchtrittsquerschnitt der Verriegelungsstrukturen hindurch.

Im Hinblick auf eine preisgünstige Fertigung der Aufbewahrungskassette, insbesondere in einem Spritzgussverfahren, wird ferner vorgeschlagen, dass die mit dem Deckel verbundene Verriegelungsstruktur einstückig mit einer Lasche geformt ist, die sich entlang der Innenseite des Deckels erstreckt und als Haltelasche für die an der Innenseite anliegende Druckschrift dient. Derartige Laschen sind an den heutzutage zur Aufnahme einer DVD verwendeten Aufbewahrungskassetten regelmäßig bereits angeformt. Zusätzlich werden nun an diesen Laschen noch die Verriegelungsstrukturen einstückig mit angeformt. Dies bedeutet, dass die Fertigung der erfindungsgemäßen Aufbewahrungskassette - nach nur geringfügigen Änderungen am Spritzwerkzeug - auf denselben Fertigungsmaschinen erfolgen kann, auf denen auch die herkömmlichen Aufbewahrungskassetten hergestellt werden.

Mit weiteren Ausgestaltungen der Aufbewahrungskassette wird vorgeschlagen, dass die erste und die zweite Verriegelungsstruktur in Längsrichtung des Verriegelungsteils zueinander versetzt sind, und dass die erste Verriegelungsstruktur paarweise ausgebildet ist, wobei sich in Längsrichtung des Verriegelungsteils betrachtet zwischen diesem Paar die zweite Verriegelungsstruktur befindet.

Weitere Vorteile und Einzelheiten einer erfindungsgemäßen Aufbewahrungskassette werden nachfolgend anhand der zugehörigen Zeichnungen erläutert. Darin zeigen:
- Fig. 1: in einer Schnittdarstellung die erfindungsgemäße Aufbewahrungskassette in geschlossenem und gesichertem Zustand;
- Fig. 2: eine Draufsicht auf das als Basisteil ausgebildete erste Grundelement der Aufbewahrungskassette bei geöffneter Aufbewahrungskassette;
- Fig.3: einen Teilschnitt der erfindungsgemäßen Aufbewahrungskassette in teilweise geöffnetem Zustand und
- Fig. 4: einen Teilschnitt entlang der in Fig. 2 eingezeichneten Schnittebene IV-IV.

Die nachfolgend beschriebene Aufbewahrungskassette entspricht in ihrer Grundstruktur weitgehend der Aufbewahrungskassette nach der EP 1 083 569 Al, weshalb bezüglich etwaiger Einzelheiten auf diese Vorveröffentlichung Bezug genommen wird.

Es handelt sich bei der Aufbewahrungskassette um eine rechteckige Kunststoffbox aus einem unteren ersten Grundelement 1 und einem oberen zweiten Grundelement 2. Das erste Grundelement 1 ist das Basisteil, das zweite Grundelement 2 der Deckel der Aufbewahrungskassette. Im einzelnen besteht das Gehäuse der Kunststoffbox aus zwei langen Stirnwänden 3, 4, zwei kurzen, jeweils geteilten Stirnwänden 5, 6, einer oberen rechteckigen Wand 7 und einer unteren rechteckigen Wand 8. Die obere rechteckige Wand 7 bildet die Grundfläche des zweiten Grundelements 2, die untere rechteckige Wand 8 bildet die Basisfläche des Grundelements 1 der Aufbewahrungskassette. Die Wände 7, 8 und Stirnwände 3, 4, 5, 6 umschließen den Innenraum der Aufbewahrungskassette, in dem sich eine oder mehrere Compactdiscs 13 befinden.

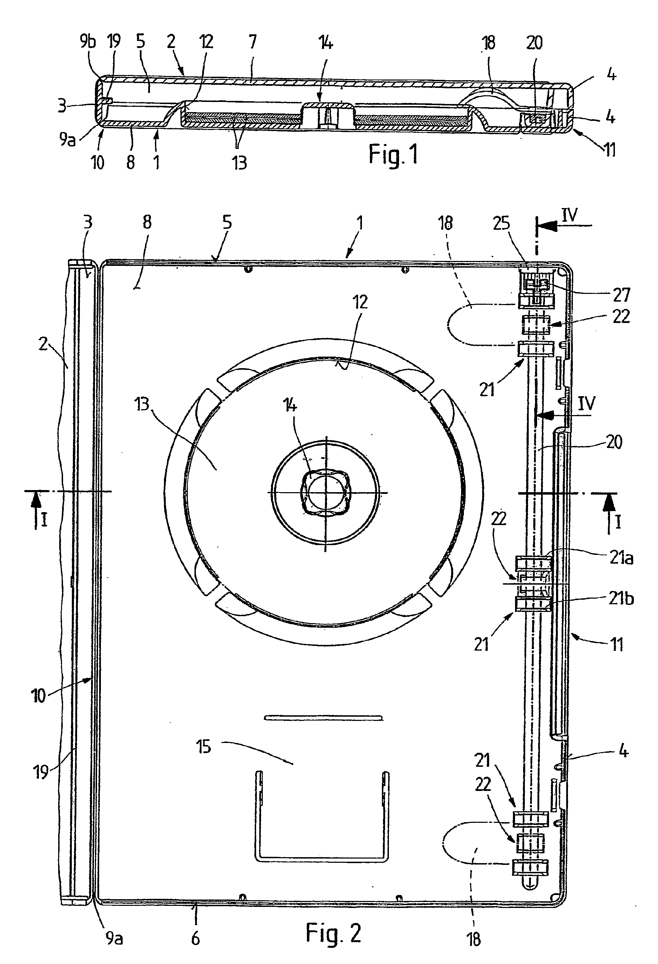

Fig. 1 läßt erkennen, daß die Grundelemente 1, 2 über ein doppeltes Scharnier gelenkig miteinander verbunden sind. Das doppelte Scharnier befindet sich im Bereich der langen Stirnwand 3. Hierzu ist die Stirnwand 3 über ein erstes Gelenk 9a

des doppelten Scharniers mit dem das Basisteil bildenden Grundelement 1, und über ein zweites Gelenk 9b mit dem als Deckel dienenden Grundelement 2 verbunden. In beiden Fällen handelt es sich um sogenannte Filmscharniere, d.h. einstückig einschließlich den beiden Grundelementen 1, 2 und der Stirnwand 3 gespritzten Gelenken. Dies bedeutet zugleich, daß das gesamte Gehäuse der Aufbewahrungskassette ein einziges, in einem Spritzvorgang hergestelltes Kunststoffteil ist. Als Werkstoff geeignet ist insbesondere Polypropylen, da bei diesem Material auch ein oftmaliges Biegen der Gelenke 9a, 9b zu keiner Materialschwächung führt.

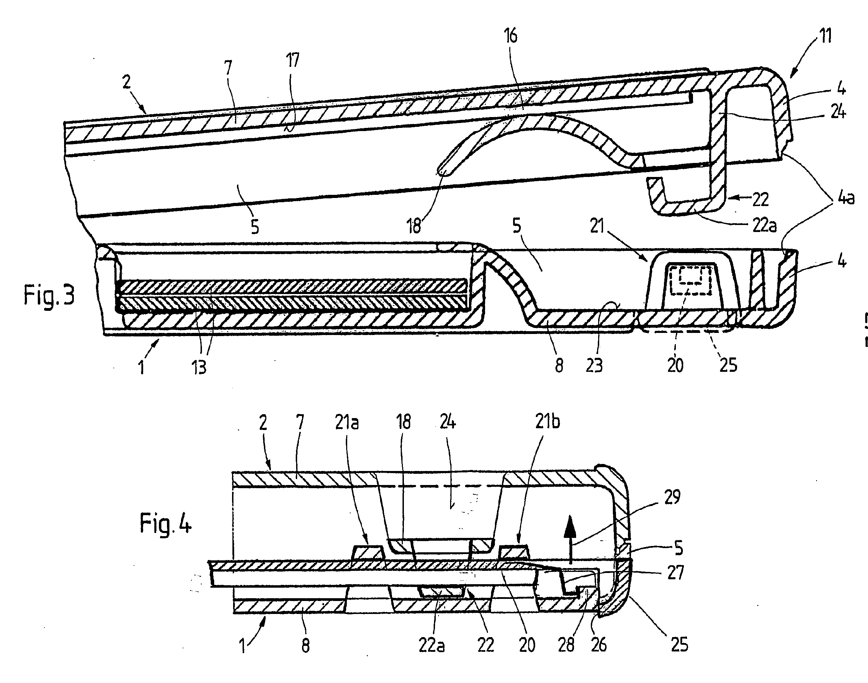

Die Stirnwand 3 bildet zusammen mit den beiden Gelenken 9a, 9b den ersten Längsrand 10 der Aufbewahrungskassette. Diesem ersten Längsrand 10 abgewandt ist die Kassette mit dem zweiten Längsrand 11 versehen. Im Bereich des zweiten Längsrandes 11 wird die Aufbewahrungskassette geöffnet. Fig. 3 zeigt die Aufbewahrungskassette in leicht geöffnetem Zustand im Bereich dieses zweiten Längsrandes 11. Dort, wo im Bereich des zweiten Längsrandes 11 die beiden Stirnwände 4 zusammentreffen, können zusammenwirkende Rastelemente 4a angeformt sein, nach deren Lösen sich die Aufbewahrungskassette um die Gelenke 9a, 9b aufschwenken läßt.

In das Grundelement 1 der Aufbewahrungskassette lassen sich Bild-, Ton- oder Datenträger einlegen, wozu das Grundelement 1 mit einer vorzugsweise kreisrunden Einsenkung 12 versehen ist. Bei der Darstellung nach Fig. 1 befinden sich insgesamt zwei Compactdiscs 13 in der Einsenkung 12. Die Compactdiscs 13 werden in ihrem zentralen Loch mittels eines zentralen Zapfens 14 gehalten, der Bestandteil des Grundelements 1 ist. Auf der Innenseite des Grundelements 1 befindet sich ferner ein zusätzliches Fach 15, welches z. B. einen weiteren, in diesem Fall rechteckig geformten Datenträger aufnehmen kann.

Die Figuren 1 bis 3 lassen erkennen, daß das untere Grundelement 1 dieselbe Größe aufweist, wie das obere Grundelement 2. Insbesondere weisen die Stirnwände 4,5, 6 bei dem unteren wie bei dem oberen Grundelement jeweils in etwa dieselbe Höhe auf, so daß die Trennebene der Aufbewahrungskassette ungefähr in deren Mitte liegt. Hierdurch wird eine Zweiteilung des Innenraums erreicht. In dem unteren, ausschließlich durch das Grundelement 1 gebildeten Teil des Innenraums befinden sich die Compactdiscs. In dem oberen, ausschließlich durch das Grundelement 2 gebildeten Teil des Innenraums steht zusätzlicher Platz zur Verfügung, der vorzugsweise dafür genutzt wird, dort eine Druckschrift wie z.B. ein Begleitheftₛ unterzubringen. In diesem Begleitheft können sich z.B. schriftliche Erläuterungen zu dem Inhalt oder der Verwendung der Compactdisc finden.

In Fig. 3 ist ein solches Begleitheft 16 dargestellt. Erkennbar ist, daß das Begleitheft 16 an der Innenseite 17 des oberen Grundelements 2 durch federnde Laschen 18 gehalten wird, wobei die Laschen 18 einstückig an dem oberen Grundelement 2 angeformt sind. Bei dem dargestellten Ausführungsbeispiel sind, wie insbesondere die Draufsicht Fig. 2 erkennen läßt, insgesamt zwei derartiger Laschen 18 vorhanden, wobei sich diese Laschen entlang der Innenseite 17 der oberen Wand 7 des Grundelements 2 erstrecken. Infolge ihres federnden Verhaltens dienen die Laschen 18 als Haltelaschen für das an der Innenseite 17 anliegende Begleitheft 16.

Während die Laschen 18 im Bereich des zweiten Längsrandes 11 angeordnet sind, kann sich das Begleitheft 16 im Bereich des ersten Längsrandes 10 auf einem Steg 19 abstützen, der an der Innenseite der gelenkigen Stirnwand 3 angeformt ist.

Die Aufbewahrungskassette ist mit einem Sicherungssystem versehen, um die Kassette gegen einen unbefugten Zugriff auf deren Inhalt zu schützen. Das hierbei verwendete Sicherungselement ist aus der Kassette entfernbar, so daß anschließend die Aufbewahrungskassette in herkömmlicher Weise geöffnet und geschlossen werden kann. Einzelheiten des Sicherungssystems werden nachfolgend unter Bezugnahme vor allem auf die Figuren 3 und 4 erläutert:
Die wesentlichen Bestandteile des Sicherungssystems sind ein separates Verriegelungsteil 20 in Gestalt eines langgestreckten, sich parallel zu dem zweiten Längsrand 11 erstreckenden Stabes, ferner eine erste Verriegelungsstruktur 21 an dem ersten Grundelement 1 und eine zweite Verriegelungsstruktur 22 an dem zweiten Grundelement 2. Bei dem dargestellten Ausführungsbeispiel ist die erste Verriegelungsstruktur 21 ein U-förmiges Teil, welches mit seinen beiden Schenkeln an der Innenseite 23 der Wand 8 des Basisteils angeformt ist. Auf diese Weise entsteht eine Art Bogen, der sich quer zur Längsrichtung des separaten Verriegelungsteils 20 erstreckt, und durch den dieses Verriegelungsteil 20 hindurchtreten kann.

Die zweite Verriegelungsstruktur 22 ist einstückig zu der federnden Lasche 18 geformt, und weist die Gestalt einer einseitig angeformten und an ihrem anderen Ende freien Lasche auf. Diese Lasche ist im Querschnitt, ebenso wie die erste Verriegelungsstruktur 21, U-förmig gestaltet, jedoch entgegengesetzt der U-förmigen ersten Verriegelungsstruktur 21. Der sich im wesentlichen parallel zu den Wänden 7, 8 erstreckende Steg 22a der zweiten Verriegelungsstruktur 22 kann bei geschlossenem Gehäuse an der Innenseite 23 des ersten Grundelements 1 anliegen. Bei einer Fluchtung der beiden Verriegelungsstrukturen 21, 22 infolge geschlossener Kassette verbleibt ein Durchtrittsquerschnitt, in den genau der Querschnitt des stabförmigen Verriegelungsteils 20 hineinpaßt. Zur Illustrierung ist daher in Fig. 3 das stabförmige Verriegelungsteil 20 gestrichelt in jener Lage eingezeichnet, die das Verriegelungsteil 20 bei gesicherter Aufbewahrungskassette einnimmt, obwohl Fig. 3 die Kassette nicht in gesicherter, sondern in ungesicherter Stellung zeigt.

Im Ergebnis stellt sich bei geschlossener Aufbewahrungskassette sowie darin eingeführtem Verriegelungsteil 20 eine gegenseitige Verriegelung der beiden Grundelemente 1, 2 dergestalt ein, daß die erste Verriegelungsstruktur 21 das Verriegelungsteil 20 an seiner dem zweiten Grundelement 2 zugewandten Seite, und die zweite Verriegelungsstruktur 22 das Verriegelungsteil 20 auf seiner dem ersten Grundelement 1 zugewandten Seite umgreift. Infolge dieses Umgreifens lassen sich die beiden Grundelemente 1, 2 nicht mehr voneinander weg bewegen, die Gehäusehälften sind gegeneinander verriegelt.

Besonders kostengünstig ist die unmittelbare Anformung der laschenförmigen zweiten Verriegelungsstruktur 22 an der ohnehin bereits vorhandenen Lasche 18, welche das Begleitheft 16 festhält. Zweite Verriegelungsstruktur 22 und Lasche 18 sind über einen gemeinsamen Verbindungsabschnitt 24 an der Innenseite 17 des Deckels angeformt.

Die genaue Lage der einzelnen Verriegelungsstrukturen läßt am besten Figur 2 erkennen. Danach sind die ersten Verriegelungsstrukturen 21 jeweils paarweise angeordnet, und zwar im Bereich der Ecken sowie noch einmal in der Mitte des zweiten Längsrandes 11 der Kassette. In Fig. 2 ist ein solches Paar mit dem Bezugszeichen 21 a, 21 b versehen. Man erkennt, daß, in Längsrichtung des Verriegelungsteils 20 betrachtet, sich bei geschlossener Box die zweite Verriegelungsstruktur 22 zwischen diesem Paar 21 a, 21 b der ersten Verriegelungsstruktur befindet. Dies bedeutet zugleich, daß die ersten und die zweiten Verriegelungsstrukturen 21 bzw. 22 in Längsrichtung des Verriegelungsteils 20 zueinander versetzt angeordnet sind.

Gemäß Fig. 4 ist das parallel zum zweiten Längsrand 11 angeordnete und zu der dortigen Stirnwand 4 einen Abstand aufweisende Verriegelungsteil 20 an seinem einen Ende mit einer fest daran angeformten Platte 25 versehen. Das Verriegelungsteil 20 einschließlich der Platte 25 besteht aus Kunststoff. Die Platte 25 ist so bemessen, daß sie eine ansonsten dort befindliche Öffnung im ersten Grundelement 1 verschließt. Diese Öffnung erstreckt sich, wie Fig. 4 erkennen läßt, über die dortige Kante des ersten Grundelements 1. An der Platte 25, die zwecks besserem Ergreifen einen kleinen Vorsprung 26 aufweist, läßt sich das Verriegelungsteil 20 ergreifen und in Längsrichtung vollständig aus dem Gehäuse der Aufbewahrungskassette herausziehen. Dieses Herausziehen ist jedoch erst dann möglich, wenn zunächst das Verriegelungsteil entsperrt wird. Denn bei vollständig in der Kassette befindlichem Verriegelungsteil 20 stützt sich dieses über ein federndes Sperrteil 27 an einer Sperrnase 28 des zweiten Grundelements 2 ab. Das Sperrteil 27 besteht vorzugsweise aus magnetisierbarem Stahlblech und ist so an dem aus Kunststoff bestehenden Verriegelungsteil 20 befestigt, daß das Sperrteil 27 von der Sperrnase 28 wegfedern kann. Ein mechanischer Zugriff auf das Sperrteil 27 ist bei geschlossener Kassette allerdings nicht möglich. Vielmehr werden 'hierzu Magnetkräfte eingesetzt, indem von unten ein abstoßender oder von oben ein anziehender Magnet an das Gehäuse der Aufbewahrungskassette gehalten wird. Hierdurch bewegt sich das Sperrteil 27 entsprechend dem Bewegungspfeil 29 und löst sich hierbei von der Sperrnase 28. Erst in diesem Zustand läßt sich das Verriegelungsteil 20 vollständig aus der Kassette herausziehen, wodurch die Kassette dann entsichert ist.

Gemäß den Figuren 3 und 4 befinden sich alle Bestandteile des Sicherungssystems innerhalb der durch das untere Grundelement 1 gebildeten Hälfte des Gehäuses. Die obere, durch das Grundelement 2 gebildete Gehäusehälfte bleibt daher vollständig für die Aufnahme eines möglichst großformatigen Begleitheftes 16 frei.

### Bezugszeichenliste

- 1: Grundelement, Basisteil
- 2: Grundelement, Deckel
- 3: Stirnwand
- 4: Stirnwand
- 4a: Rastelement
- 5: kurze Stirnwand
- 6: kurze Stirnwand
- 7: obere Wand, Grundfläche
- 8: untere Wand, Basisfläche
- 9a: Gelenk
- 9b: Gelenk
- 10: erster Längsrand
- 11: zweiter Längsrand
- 12: Einsenkung
- 13: Compactdisc
- 14: Zapfen
- 15: Fach
- 16: Begleitheft
- 17: Innenseite
- 18: Lasche
- 19: Steg
- 20: Verriegelungsteil
- 21: erste Verriegelungsstruktur
- 21a: erste Verriegelungsstruktur
- 21b: zweite Verriegelungsstruktur
- 22: zweite Verriegelungsstruktur
- 22a: Steg
- 23: Innenseite
- 24: Verbindungsabschnitt
- 25: Platte
- 26: Vorsprung
- 27: Sperrteil
- 28: Sperrnase
- 29: Bewegungspfeil

## Patentansprüche

1. Aufbewahrungskassette für mindestens einen Bild-, Ton- oder Datenträger, z. B. eine CD oder eine DVD, mit zwei im wesentlichen rechteckig gestalteten, entlang eines ersten Längsrandes (10) über ein Gelenk (9a, 9b) miteinander verbundenen und einen den Bild-, Ton- oder Datenträger sowie eine Druckschrift aufnehmenden Innenraum umschließenden Grundelementen, wobei das erste Grundelement ein den mindestens einen Datenträger (13) haltendes und hierzu entsprechende Haltemittel aufweisendes Basisteil (1) ist, das entlang seiner Ränder mit Schmalseitenwänden (4, 5, 6) versehen ist, und das zweite Grundelement ein Deckel (2) ist, welcher bei geschlossener Aufbewahrungskassette dessen Innenraum verschließt und eine Druckschrift aufnimmt, und mit einem zwischen den einander zugewandten Innenseiten (23, 17) von Basisteil (1) und Deckel (2) angeordneten und aus der Aufbewahrungskassette herausziehbaren Verriegelungsteil (20), welches Basisteil (1) und Deckel (2) im Bereich des dem ersten Längsrand (10) abgewandten zweiten Längsrandes (11) gegeneinander verriegelt, wobei fest mit dem Basisteil (1) verbundene und in den Innenraum hinein ragende erste Verriegelungsstrukturen (21) das Verriegelungsteil (20) an seiner dem Deckel (2) zugewandten Seite, und fest mit dem Deckel (2) verbundene und in den Innenraum hinein ragende zweite Verriegelungsstrukturen (22) das Verriegelungsteil (20) auf seiner dem Basisteil (1) zugewandten Seite umgreifen,
**dadurch gekennzeichnet,**
**dass** die ersten Verriegelungsstrukturen (21) zur Unterbringung einer möglichst großformatigen Druckschrift im Deckel (2) nicht über die Höhe der Schmalseitenwände (4, 5, 6) des Basisteils (1) hinausragen.

2. Aufbewahrungskassette nach Anspruch 1, **dadurch gekennzeichnet, dass** sich Basisteil (1) und Deckel (2) jeweilsaus einer parallel zu dem Bild-, Ton- oder Datenträger angeordneten Grundfläche (8 bzw. 7) sowie hierzu senkrecht angeordnetem und die Kassette an ihren Schmalseiten verschließenden Stirnwänden (3, 4, 5, 6) zusammensetzen, und dass die Verriegelungsstrukturen (21, 22) einstückig an den Grundflächen (8 bzw. 7) angeformt sind und von dort in den Innenraum der Aufbewahrungskassette vorstehen.

3. Aufbewahrungskassette nach Anspruch 1 oder Anspruch 2, **dadurch gekennzeichnet, dass** die erste Verriegelungsstruktur (21) bogenförmig in den Innenraum vorsteht.

4. Aufbewahrungskassette nach einem der Ansprüche 1 bis 3, **dadurch gekennzeichnet, dass** die zweite Verriegelungsstruktur (22) in Gestalt einer hakenförmig gebogenen Lasche in den Innenraum vorsteht.

5. Aufbewahrungskassette nach einem der vorangehenden Ansprüche, **dadurch gekennzeichnet, dass** das Verriegelungsteil (20) ein Stab ist, welcher sich parallel zu dem zweiten Längsrand (11) erstreckt.

6. Aufbewahrungskassette nach Anspruch 5, **dadurch gekennzeichnet, dass** sich der Stab über nahezu die gesamte Länge des zweiten Längsrandes (11) erstreckt, und sich die Verriegelungsstrukturen (21, 22) sowohl im Bereich des einen Endes wie auch im Bereich des anderen Endes des zweiten Längsrandes (11) befinden.

7. Aufbewahrungskassette nach einem der vorangehenden Ansprüche, **dadurch gekennzeichnet, dass** das Verriegelungsteil (20) in Ausziehrichtung formschlüssig gegen zumindest eines der Grundelemente (1, 2) gesperrt ist.

8. Aufbewahrungskassette nach Anspruch 7, **dadurch gekennzeichnet, dass** das Verriegelungsteil (20) in Ausziehrichtung durch ein quer zu der Ausziehrichtung federndes Sperrteil (27) gesperrt ist.

9. Aufbewahrungskassette nach einem der vorangehenden Ansprüche, **dadurch gekennzeichnet, dass** das Sperrteil (27) aus magnetisierbarem Metall besteht und an dem Verriegelungsteil (20) befestigt ist.

10. Aufbewahrungskassette nach einem der vorangehenden Ansprüche, **dadurch gekennzeichnet, dass** das Gehäuse der Aufbewahrungskassette mit einer Öffnung versehen ist, durch die das Verriegelungsteil (20) herausziehbar ist, und dass das Verriegelungsteil (20) mit einer Platte (25) versehen ist, welche in Verriegelungsstellung die Öffnung verschließt.

11. Aufbewahrungskassette nach Anspruch 10 in Verbindung mit Anspruch 8 oder Anspruch 9, **dadurch gekennzeichnet, dass** das Sperrteil (27) unmittelbar hinter der Platte an dem Verriegelungsteil (20) angeordnet ist.

12. Aufbewahrungskassette nach einem der vorangehenden Ansprüche, **dadurch gekennzeichnet, dass** die mit dem Deckel (2) verbundene Verriegelungsstruktur (22) einstückig mit einer Lasche (18) geformt ist, die sich entlang der Innenseite (17) des Deckels (2) erstreckt und als Haltelasche für die an der Innenseite (17) anliegende Druckschrift dient.

13. Aufbewahrungskassette nach einem der vorangehenden Ansprüche, **dadurch gekennzeichnet, dass** die erste und die zweite Verriegelungsstruktur in Längsrichtung des Verriegelungsteils (20) zueinander versetzt sind.

14. Aufbewahrungskassette nach Anspruch 13 **gekennzeichnet durch** eine paarweise ausgebildete erste Verriegelungsstruktur (21), wobei sich in Längsrichtung des Verriegelungsteils (20) betrachtet zwischen diesem Paar die zweite Verriegelungsstruktur (22) bildet.

## Claims

1. Storage case for at least one image, sound or data carrier, e.g. a CD or a DVD, having two substantially rectangular basic elements connected to one another by a joint (9a, 9b) along a first longitudinal edge (10) and enclosing an internal space accommodating the image, sound or data carrier and a pamphlet, wherein the first basic element is a base part (1), which holds the at least one data carrier (13), has corresponding holding means for that purpose, and is provided with narrow-side walls (4, 5, 6) along its edges, and the second basic element is a lid (2), which closes off the internal space of the storage case when the latter is closed and accommodates a pamphlet, and having a locking part (20), which is arranged between the mutually facing inner sides (23, 17) of the base part (1) and the lid (2), can be pulled out of the storage case and locks the base part (1) and the lid (2) together in the region of the second longitudinal edge (11) remote from the first longitudinal edge (10), wherein first locking structures (21), which are fixedly connected to the base part (1) and protrude into the internal space, engage around the locking part (20) on its side facing the lid (2) and second locking structures (22), which are fixedly connected to the lid (2) and protrude into the internal space, engage around the locking part (20) on its side facing the base part (1),
**characterized**
**in that,** in order that as large a pamphlet as possible can be accommodated in the lid (2), the first locking structures (21) do not protrude above the height of the narrow-side walls (4, 5, 6) of the base part (1).

2. Storage case according to Claim 1, **characterized in that** the base part (1) and the lid (2) are composed in each case of a base area (8 and 7, respectively) arranged parallel to the image, sound or data carrier and side walls (3, 4, 5, 6) arranged perpendicularly thereto and closing off the case on its narrow sides, and **in that** the locking structures (21, 22) are formed in one piece on the base areas (8 and 7) and project from there into the internal space of the storage case.

3. Storage case according to Claim 1 or Claim 2, **characterized in that** the first locking structure (21) projects into the internal space in an arched manner.

4. Storage case according to one of Claims 1 to 3, **characterized in that** the second locking structure (22) projects into the internal space in the form of a tab bent in the form of a hook.

5. Storage case according to one of the preceding claims, **characterized in that** the locking part (20) is a bar which extends parallel to the second longitudinal edge (11).

6. Storage case according to Claim 5, **characterized in that** the bar extends over virtually the entire length of the second longitudinal edge (11) and the locking structures (21, 22) are located both in the region of one end and in the region of the other end of the second longitudinal edge (11).

7. Storage case according to one of the preceding claims, **characterized in that** the locking part (20) is blocked in the pulling-out direction in a form-fitting manner against at least one of the basic elements (1).

8. Storage case according to Claim 7, **characterized in that** the locking part (20) is blocked in the pulling-out direction by a blocking part (27) which is resilient transversely with respect to the pulling-out direction.

9. Storage case according to one of the preceding claims, **characterized in that** the blocking part (27) consists of magnetizable material and is fastened to the locking part (20).

10. Storage case according to one of the preceding claims, **characterized in that** the housing of the storage case is provided with an opening through which the locking part (20) can be pulled out, and **in that** the locking part (20) is provided with a plate (25) which closes off the opening in the locking position.

11. Storage case according to Claim 10 in conjunction with Claim 8 or Claim 9, **characterized in that** the locking part (27) is arranged directly behind the plate on the locking part (20).

12. Storage case according to one of the preceding claims, **characterized in that** the locking structure (22) connected to the lid (2) is formed in one piece with a tab (18) which extends along the inside (17) of the lid (2) and serves as a retaining tab for the pamphlet resting against the inside (17).

13. Storage case according to one of the preceding claims, **characterized in that** the first and second locking structures are offset with respect to one another in the longitudinal direction of the locking part (20).

14. Storage case according to Claim 13, **characterized by** a first locking structure (21) in pair form, wherein the second locking structure (22) is formed between this pair as seen in the longitudinal direction of the locking part (20).

## Revendications

1. Cassette de stockage pour au moins un support d'images, de sons ou de données, par exemple un CD ou un DVD, avec deux éléments de fond de forme essentiellement rectangulaire, reliés l'un à l'autre le long d'un premier bord longitudinal (10) par une articulation (9a, 9b) et entourant un espace intérieur contenant un support d'images, de sons ou de données ainsi qu'une notice imprimée, dans laquelle le premier élément de base est une partie de base (1) qui maintient ledit au moins un support de données (13) et qui présente à cet effet des moyens de maintien correspondants, et qui est munie de parois latérales étroites (4, 5, 6) le long de ses bords, et le deuxième élément de base est un couvercle (2) qui, lorsque la cassette de stockage est fermée, ferme l'espace intérieur de celle-ci et contient une notice imprimée, et avec une partie de verrouillage (20) disposée entre les faces intérieures (23, 17) tournées l'une vers l'autre de la partie de base (1) et du couvercle (2) et pouvant être extraite de la cassette de stockage, qui verrouille l'un contre l'autre la partie de base (1) et le couvercle (2) dans la région du deuxième bord longitudinal (11) opposé au premier bord longitudinal (10), dans laquelle des premières structures de verrouillage (21) solidaires de la partie de base (1) et pénétrant dans l'espace intérieur accrochent la partie de verrouillage (20) sur son côté tourné vers le couvercle (2) et des deuxièmes structures de verrouillage (22) solidaires du couvercle (2) et pénétrant dans l'espace intérieur accrochent la partie de verrouillage (20) sur son côté tourné vers la partie de base (1), **caractérisée en ce que** les premières structures de verrouillage (21) ne s'étendent pas au-delà de la hauteur des parois latérales étroites (4, 5, 6) de la partie de base (1) pour permettre le placement d'une notice imprimée d'un format aussi grand que possible dans le couvercle (2).

2. Cassette de stockage selon la revendication 1, **caractérisée en ce que** la partie de base (1) et le couvercle (2) se composent respectivement d'une face de base (8 ou 7) disposée parallèlement au support d'images, de sons ou de données ainsi que de parois frontales (3, 4, 5, 6) disposées perpendiculairement à celle-ci et fermant la cassette sur ses côtés étroits, et **en ce que** les structures de verrouillage (21, 22) sont formées d'une pièce sur les faces de base (8 ou 7) et sont en saillie sur celles-ci dans l'espace intérieur de la cassette de stockage.

3. Cassette de stockage selon la revendication 1 ou 2, **caractérisée en ce que** la première structure de verrouillage (21) est saillante en forme d'arc dans l'espace intérieur.

4. Cassette de stockage selon l'une quelconque des revendications 1 à 3, **caractérisée en ce que** la deuxième structure de verrouillage (22) est saillante dans l'espace intérieur sous la forme d'une patte recourbée en forme de crochet.

5. Cassette de stockage selon l'une quelconque des revendications précédentes, **caractérisée en ce que** la partie de verrouillage (20) est une barre, qui s'étend parallèlement au deuxième bord longitudinal (11).

6. Cassette de stockage selon la revendication 5, **caractérisée en ce que** la barre s'étend pratiquement sur toute la longueur du deuxième bord longitudinal (11), et les structures de verrouillage (21, 22) se trouvent aussi bien dans la région de la première extrémité que dans la région de la deuxième extrémité du deuxième bord longitudinal (11).

7. Cassette de stockage selon l'une quelconque des revendications précédentes, **caractérisée en ce que** la partie de verrouillage (20) est bloquée par complémentarité de forme dans la direction d'extraction contre au moins un des éléments de base (1, 2).

8. Cassette de stockage selon la revendication 7, **caractérisée en ce que** la partie de verrouillage (20) est bloquée dans la direction d'extraction au moyen d'une pièce de blocage (27) à ressort agissant transversalement à la direction d'extraction.

9. Cassette de stockage selon l'une quelconque des revendications précédentes, **caractérisée en ce que** la pièce de blocage (27) est constituée d'un métal magnétisable et est fixée sur la partie de verrouillage (20).

10. Cassette de stockage selon l'une quelconque des revendications précédentes, **caractérisée en ce que** le boîtier de la cassette de stockage est doté d'une ouverture, à travers laquelle la partie de verrouillage (20) peut être extraite, et **en ce que** la partie de verrouillage (20) est munie d'une plaque (25), qui ferme l'ouverture dans la position de verrouillage.

11. Cassette de stockage selon la revendication 10 en relation avec la revendication 8 ou 9, **caractérisée en ce que** la pièce de blocage (27) est placée sur la partie de verrouillage (20), directement derrière la plaque.

12. Cassette de stockage selon l'une quelconque des revendications précédentes, **caractérisée en ce que** la structure de verrouillage (22) solidaire du couvercle (2) est formée d'une pièce avec une patte (18), qui s'étend le long de la face intérieure (17) du couvercle (2) et qui sert de patte de maintien pour la notice imprimée placée sur la face intérieure (17).

13. Cassette de stockage selon l'une quelconque des revendications précédentes, **caractérisée en ce que** la première et la deuxième structures de verrouillage sont décalées l'une par rapport à l'autre dans la direction longitudinale de la partie de verrouillage (20).

14. Cassette de stockage selon la revendication 13, **caractérisée par** une première structure de verrouillage (21) réalisée sous la forme d'une paire, dans laquelle, en regardant dans la direction longitudinale de la partie de verrouillage (20), la deuxième structure de verrouillage (22) se forme entre cette paire.
